# EUROPÄISCHE PATENTANMELDUNG

(11) **EP 3 213 830 A1**
(43) Veröffentlichungstag der Anmeldung: **06.09.2017**
(21) Anmeldenummer: 16305238.4
(22) Anmeldetag: 02.03.2016
(51) Int. Cl.: B21C 37/08, B23K 9/025, B23K 9/095, B23K 9/167, B23K 26/03, B23K 26/262

(54) **VERFAHREN ZUR HERSTELLUNG EINES ROHRES AUS METALL**

(71) Anmelder: Nexans, 75008 Paris (FR)
(72) Erfinder: SOIKA, Rainer, 30559 Hannover (DE); EGERER, Ralf, 38723 SEESEN (DE)
(74) Vertreter: Lenne, Laurence

(57) **Zusammenfassung**

Es wird ein Verfahren zur Herstellung eines Rohres aus Metall angegeben, mit welchem ein kontinuierlich in seiner Längsrichtung bewegtes Metallband in einer Formungseinrichtung zu einem Rohr mit in Längsrichtung verlaufendem Schlitz geformt wird und mit welchem danach die am Schlitz aneinander liegenden Kanten des Metallbandes miteinander verschweißt werden. Dabei wird das Material des Metallbandes an beiden Kanten in einem Schweißbereich aufgeschmolzen und die beiden Kanten des Metallbandes werden nach Abkühlung fest miteinander verbunden. Im Schweißbereich wird ein die dort herrschende Temperatur messender Temperatursensor (6) angeordnet, von welchem der gemessenen Temperatur entsprechende Meßwerte als Istwerte einem Regler (7) aufgegeben werden, in dem als Sollwert ein Temperaturbereich gespeichert ist. Bei einer Abweichung des Istwerts vom Sollwert der Temperatur wird die Temperatur im Schweißbereich durch den Regler (7) im Ausgleichssinne geregelt.

## Beschreibung

Die Erfindung bezieht sich auf ein Verfahren zur Herstellung eines Rohres aus Metall, mit welchem ein kontinuierlich in seiner Längsrichtung bewegtes Metallband in einer Formungseinrichtung zu einem Rohr mit in Längsrichtung verlaufendem Schlitz geformt wird und mit welchem danach die am Schlitz aneinander liegenden Kanten des Metallbandes miteinander verschweißt werden, wobei das Material des Metallbandes an beiden Kanten in einem Schweißbereich aufgeschmolzen wird und wobei die beiden Kanten des Metallbandes nach Abkühlung fest miteinander verbunden werden (EP 0 703 017 B1).

Rohre aus Metall können zum Fortleiten von flüssigen oder gasförmigen Medien dienen. Sie können auch als elektrische Leiter eingesetzt werden, beispielsweise in koaxialen Hochfrequenzkabeln. Ein weiteres Einsatzgebiet sind elektrische und/oder optische Kabel, bei denen ein Rohr aus Metall als Schutz für eine umschlossene Kabelseele dienen kann. In allen möglichen Ausführungsformen können die Rohre als Glattrohre ausgeführt sein. Sie können aber auch zur Verbesserung ihrer Biegbarkeit quer zu ihrer Längsrichtung gewellt sein, und zwar entweder wendelförmig oder ringförmig.

In der eingangs erwähnten EP 0 703 017 B1 ist ein Verfahren beschrieben, mit dem ein Rohr aus einem Metallband hergestellt wird, das mittels einer Abzugseinrichtung kontinuierlich von einer Spule abgezogen wird. Das Metallband wird in einer Formungseinrichtung zu einem Schlitzrohr geformt, das weiter kontinuierlich in seiner Längsrichtung bewegt wird und dessen Seitenkanten an einem in Längsrichtung verlaufenden Schlitz aneinander liegen. Die Seitenkanten werden bei diesem Verfahren unter Einsatz eines Lasers bzw. einer Laserschweißeinrichtung miteinander verschweißt. Dabei wird das Material des Metallbandes an beiden Seitenkanten aufgeschmolzen. Die Seitenkanten werden mit Werkzeugen gegeneinander gedrückt, so daß sie nach Abkühlung durch eine Schweißnaht fest miteinander verbunden sind. Das danach rundum geschlossene Rohr kann auf eine Spule aufgewickelt oder einer Weiterbearbeitung zugeführt werden. Die Qualität der Schweißnaht wird von das Verfahren durchführenden, geschulten Personen zumindest in zeitlichen Abständen durch Augenschein überwacht. Der Laser wird gegebenenfalls durch die jeweils tätige Person neu eingestellt, wenn die Schweißnaht nicht mehr den Vorgaben entspricht.

Der Erfindung liegt die Aufgabe zugrunde, das eingangs geschilderte Verfahren so weiterzubilden, daß eine gleichbleibende Qualität der Schweißnaht auf einfache Art und Weise sichergestellt werden kann.

Diese Aufgabe wird gemäß der Erfindung dadurch gelöst,
- dass im Schweißbereich ein die dort herrschende Temperatur messender Temperatursensor angeordnet wird, von welchem der gemessenen Temperatur entsprechende Meßwerte als Istwerte einem Regler aufgegeben werden, in dem als Sollwert ein Temperaturbereich gespeichert ist, und
- dass bei einer Abweichung des Istwerts vom Sollwert der Temperatur, die Temperatur im Schweißbereich durch den Regler im Ausgleichssinne geregelt wird.

Bei Einsatz dieses Verfahrens wird der Schweißvorgang automatisch überwacht. Die Schweißnaht des Rohres kann damit in engen Grenzen im kontinuierlichen Verfahrensablauf mit gleichbleibender Qualität erzeugt werden. Im Regler wird dazu ein Temperaturbereich als Sollwert eingestellt, der für das Aufschmelzen der Kanten eines Metallbandes und das Ausbilden einer qualitativ guten Schweißnaht charakteristisch ist, und zwar unter Berücksichtigung der Wandstärke des Metallbandes und des für dasselbe eingesetzten Materials, bei dem es sich beispielsweise um Stahl, Aluminium, Kupfer oder um eine auf diesen Materialien basierende Legierung handeln kann. Der Temperatursensor mißt die Temperatur im unmittelbaren Schweißbereich, so dass die von ihm an den Regler gelieferten Istwerte der Temperatur vom Regler schnell ausgewertet werden kann. Das die Schweißtemperatur erzeugende Gerät wird dann gegebenenfalls durch den Regler auf den Sollwert der Schweißtemperatur geregelt.

Als Temperatursensor kann beispielsweise ein Infrarot-Temperatursensor eingesetzt werden. Es ist auch möglich, als Temperatursensor einen auf einer Infrarot-Temperaturmessung basierenden, den zu messenden Temperaturbereich pixelweise scannenden Sensor einzusetzen. Den einzelnen Pixeln kann dabei jeweils ein diskreter Temperaturwert zugeordnet werden. Dabei kann auch das Temperaturprofil über die Breite der Schweißnaht bestimmt werden. Hieraus kann beispielsweise auch die Breite der aufgeschmolzenen Zone ermittelt werden.

Zum Aufschmelzen der Kanten des Metallbandes kann mit Vorteil ein Laser eingesetzt werden, dessen Leistung gegebenenfalls durch den Regler sehr schnell so verändert werden kann, dass die Temperatur im Schweißbereich wieder dem Sollwert entspricht. Das ist auch bei Einsatz eines Geräts mit einer an eine elektrische Stromquelle angeschlossenen, nicht abbrennenden Elektrode über eine Veränderung der Stromstärke möglich. Ein entsprechendes Verfahren ist beispielsweise als WIG (Wolfram-Inert-Gas)-Verfahren bekannt.

Wenn zum Aufschmelzen der Kanten des Metallbandes ein Laser eingesetzt wird, dann kann dessen Optik zusätzlich zur Überwachung der Breite des aufgeschmolzenen Bereichs eingesetzt werden. Die zulässige bzw. gewünschte Breite desselben kann ebenfalls als Sollwert im Regler abgelegt werden. Er vergleicht den von der Optik gelieferten Istwert der Breite des aufgeschmolzenen Bereichs mit dem eingestellten Sollwert und ändert gegebenenfalls die Position des Lasers, d. h. die Entfernung des Laserstrahls vom Schweißbereich.

Das Verfahren nach der Erfindung wird anhand der Zeichnungen als Ausführungsbeispiel erläutert.

Es zeigen:
Fig. 1 schematisch eine Anordnung zur Durchführung des Verfahrens nach der Erfindung.
Fig. 2 eine Einzelheit aus Fig. 1 in vergrößerter Darstellung.
Fig. 3 einen Abschnitt von Fig. 2 in weiter vergrößerter Darstellung.

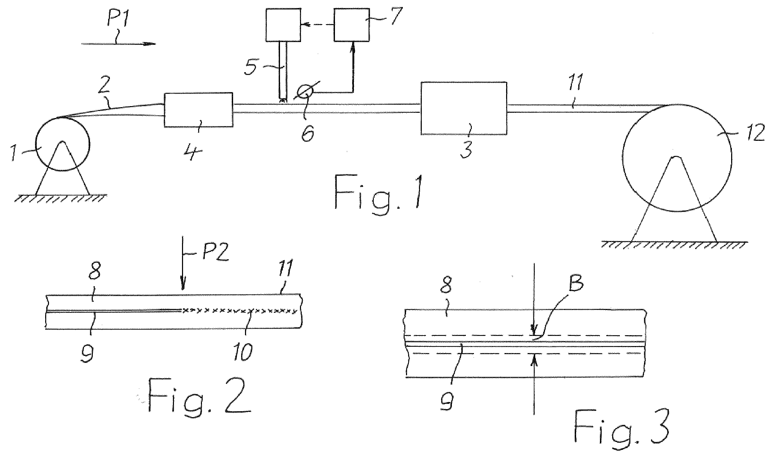

Die Anordnung nach Fig. 1 ist beispielsweise wie folgt aufgebaut:

Auf einer Spule 1 ist ein beispielsweise aus Stahl, Aluminium, Kupfer oder aus einer Legierung dieser Materialien bestehendes Metallband 2 aufgewickelt, das mittels einer Abzugseinrichtung 3 in Richtung des Pfeiles P1 von der Spule 1 abgezogen wird. Zur Anordnung gehören außerdem eine Formungseinrichtung 4 und eine Schweißeinheit 5. Im Bereich der Schweißeinheit 5 ist ein Temperatursensor 6 angeordnet, der mit einem Regler 7 verbunden ist. Weitere Einheiten, die für das Verständnis der Arbeitsweise der Anordnung nicht erforderlich sind, sind der Einfachheit halber fortgelassen.

Die Anordnung nach Fig. 1 arbeitet entsprechend dem Verfahren nach der Erfindung beispielsweise wie folgt:

Das Metallband 2 wird kontinuierlich in Richtung des Pfeiles P1 von der Spule 1 abgezogen und der Formungseinrichtung 4 zugeführt. In der Formungseinrichtung 4 wird das Metallband 2 längseinlaufend zu einem Schlitzrohr 8 mit einem in Längsrichtung verlaufenden Schlitz 9 geformt. Am Schlitz 9 liegen die beiden in Längsrichtung verlaufenden Kanten des Metallbandes 2 aneinander. Sie werden in der Schweißeinheit 5, die in Fig. 2 durch einen Pfeil P2 angedeutet ist, miteinander verschweißt, und zwar durch eine Schweißnaht 10. Das dann rundum geschlossene Rohr 11 kann auf eine Spule 12 aufgewickelt werden. Es kann aber auch einer weiteren Bearbeitung zugeführt werden.

Die Schweißeinheit 5 kann ein Laser bzw. eine Laserschweißeinrichtung sein. Sie kann aber auch als Gerät mit mindestens einer an eine Stromquelle angeschlossenen, nicht abbrennenden Elektrode ausgerüstet sein. Sie arbeitet dann beispielsweise nach dem WIG (Wolfram-Inert-Gas)-Verfahren, bei welchem dem Schweißbereich ein Gas zugeführt wird, beispielsweise Argon.

Im Schweißbereich werden die beiden Kanten des Metallbandes 2 aufgeschmolzen, und zwar bei einer vorgegebenen Temperatur. Diese Temperatur hängt vom für das Metallband 2 eingesetzten Material und von dessen Wandstärke ab.

Die Temperatur im Schweißbereich wird während des Verfahrens permanent durch den Temperatursensor 6 gemessen und dadurch überwacht. Sie liegt für Edelstahl beispielsweise bei 1400 °C, für Aluminium beispielsweise bei 660 °C und für Kupfer beispielsweise bei 1085 °C. Der Temperatursensor 6 liefert dauernd Meßwerte als Istwerte der Temperatur im Schweißbereich an den Regler 7. Im Regler 7 ist als Sollwert für die Temperatur des Schweißbereichs ein Temperaturbereich gespeichert. Der Regler 7 führt ständig einen Vergleich von Istwert und Sollwert der Temperatur durch. Die Schweißeinheit 5 wird vom Regler 7 gegebenenfalls geregelt, wenn der Istwert der Temperatur im Schweißbereich vom Sollwert abweicht.

Wenn als Schweißeinheit 5 ein Laser eingesetzt wird, dann wird für die Regelung der Temperatur im Schweißbereich mit Vorteil die Leistung des Lasers verändert, und zwar durch ein dem Laser vom Regler 7 zugeführtes Signal.

Ein Laser als Schweißeinheit 5 bietet den zusätzlichen Vorteil, dass die der gemessenen Temperatur entsprechende Infrarotstrahlung über die Optik desselben in den Temperatursensor 6 gelangt. Auch die Breite B (Fig. 3) des Schweißbereichs des Lasers kann mittels eines die Breite der Schweißnaht abtastenden Sensors überwacht und geregelt werden kann. Dazu kann dem Regler 7 ein der Breite B des Schweißbereichs entsprechendes Signal aufgegeben werden, in dem die einzuhaltende Breite des Schweißbereichs als Sollwert gespeichert ist. Der Laser kann gegebenenfalls durch den Regler 7 so geregelt werden, daß die Breite B des Schweißbereichs dem Sollwert entspricht. Das kann beispielsweise durch Änderung der Entfernung des Lasers vom Schweißbereich erfolgen. Dabei wäre gegebenenfalls gleichzeitig die Temperatur im Schweißbereich zu regeln, entsprechend dem im Vorangehenden beschriebenen Verfahren.

Die Schweißeinheit 5 könnte - wie bereits erwähnt - auch ein Gerät mit einer nicht abbrennenden Elektrode sein, die an eine Stromquelle angeschlossen ist. Ein derartiges Gerät kann mit Vorteil nach dem bekannten WIG (Wolfram-Inert-Gas)-Verfahren arbeiten. Dabei wird dem Schweißbereich zur Unterstützung der Ionisierung bei der Zündung eines Lichtbogens ein inertes Gas zugeführt, beispielsweise Argon. Für eine Regelung der Temperatur im Schweißbereich wird bei dieser Ausführung der Schweißeinheit gegebenenfalls die Stromstärke des der Elektrode zugeführten elektrischen Stroms geregelt.

## Patentansprüche

1. Verfahren zur Herstellung eines Rohres aus Metall, mit welchem ein kontinuierlich in seiner Längsrichtung bewegtes Metallband in einer Formungseinrichtung zu einem Rohr mit in Längsrichtung verlaufendem Schlitz geformt wird und mit welchem danach die am Schlitz aneinander liegenden Kanten des Metallbandes miteinander verschweißt werden, wobei das Material des Metallbandes an beiden Kanten in einem Schweißbereich aufgeschmolzen wird und wobei die beiden Kanten des Metallbandes nach Abkühlung fest miteinander verbunden werden, **dadurch gekennzeichnet,**
- **dass** im Schweißbereich ein die dort herrschende Temperatur messender Temperatursensor (6) angeordnet wird, von welchem der gemessenen Temperatur entsprechende Meßwerte als Istwerte einem Regler (7) aufgegeben werden, in dem als Sollwert ein Temperaturbereich gespeichert ist, und
- **dass** bei einer Abweichung des Istwerts vom Sollwert der Temperatur, die Temperatur im Schweißbereich durch den Regler (7) im Ausgleichssinne geregelt wird.

2. Verfahren nach Anspruch 1, **dadurch gekennzeichnet, dass** die Kanten des Metallbandes mittels eines Lasers aufgeschmolzen werden.

3. Verfahren nach Anspruch 2, **dadurch gekennzeichnet, dass** die Temperaturmessung über Infrarotstrahlung erfolgt, die über die Optik des Lasers in den Temperatursensor (6) gelangt.

4. Verfahren nach Anspruch 2, **dadurch gekennzeichnet,**
- **dass** zusätzlich über einen die Breite der Schweißnaht abtastenden Sensor die Breite des Schweißbereichs des Lasers gemessen und als Istwert dem Regler (7) aufgegeben wird, in dem ein Bereich für die Breite des Schweißbereichs als Sollwert gespeichert ist, und
- **dass** bei einer Abweichung des Istwerts vom Sollwert der Breite des Schweißbereichs, die Breite durch den Regler (7) im Ausgleichssinne geregelt wird.

5. Verfahren nach Anspruch 1, **dadurch gekennzeichnet, dass** die Kanten des Metallbandes mittels eines Geräts mit einer an eine elektrische Stromquelle angeschlossenen Elektrode aufgeschmolzen werden, vorzugsweise durch Einsatz des WIG (Wolfram-Inert-Gas)-Verfahrens.
